(19) Europäisches Patentamt
European Patent Office
Office européen des brevets

(11) Publication number: 0 292 190 B1

(12) # EUROPEAN PATENT SPECIFICATION

(45) Date of publication of patent specification: **03.03.93** (51) Int. Cl.$^5$: **C09D 5/24**, H01B 1/22

(21) Application number: **88304284.8**

(22) Date of filing: **11.05.88**

(54) **Electrically conductive coating composition.**

(30) Priority: **19.05.87 JP 122896/87**

(43) Date of publication of application:
**23.11.88 Bulletin 88/47**

(45) Publication of the grant of the patent:
**03.03.93 Bulletin 93/09**

(84) Designated Contracting States:
**DE GB**

(56) References cited:
**EP-A- 0 058 293**

**PATENT ABSTRACTS OF JAPAN, vol. 10, no. 67 (C-333); & JP-A-60 206 867 (RAION K.K.) 18-10-1985**

**PATENT ABSTRACTS OF JAPAN, vol. 11, no. 282 (C-446); & JP-A-62 079 278 (LION CORP.) 11-04-1987**

(73) Proprietor: **LION CORPORATION**
**3-7, Honjo 1-chome**
**Sumida-ku Tokyo(JP)**

(72) Inventor: **Maeno, Seiji**
**3-11-7, Sasazuka Shibuya-ku**
**Tokyo(JP)**
Inventor: **Ozaki, Hidetaka**
**2-2-203, Murakami 1113-1**
**Yachiyo-shi Chiba(JP)**
Inventor: **Yamada, Hisasi**
**1-23-4, Makuharinishi**
**Chiba-shi Chiba(JP)**

(74) Representative: **Adams, William Gordon et al**
**RAWORTH, MOSS & COOK 36 Sydenham Road**
**Croydon Surrey CR0 2EF (GB)**

EP 0 292 190 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

#### 1. Field of the Invention

The present invention relates to an electrically conductive coating composition containing a metallic powder, as a main electrically conductive material, having an electrical conductivity which remains stable for a long period.

#### 2. Description of the Related Art

Recently, remarkable developments have been made in various electronic devices or equipment such as computers, VTR, audio devices, home electric appliances, and word processors, but these electronic devices have a disadvantage in that operational errors can be caused by electromagnetic wave interference from an external source, since the electric current in such devices, etc. is very small because of the use of highly integrated electronic circuits and elements therein.

Various plastic molded articles are widely used as housings of the above-mentioned electronic appliances because of the need for light weight articles, cost-reduction, and mass production. Plastic molded articles do not provide a shielding effect against electromagnetic waves and, therefore, electromagnetic waves are easily transmitted through the plastic molded articles. Accordingly, the above-mentioned disadvantage cannot be eliminated by these plastic molded articles.

Various attempts have been made to provide plastic molded articles with shielding properties against electromagnetic waves (i.e., electromagnetic wave shielding properties): For example, electrically conductive coating compositions coated on housings of electronic appliances have been proposed as a shield against electromagnetic waves from an external source and those generated by the electronic appliances themselves. The electrically conductive coating compositions comprise electrically conductive fine powders mixed with and dispersed in organic binders and, as the electrically conductive fine powder, metallic powders such as gold, silver, nickel, copper are generally used. Although a powder of noble metals such as gold and silver has an excellent electrical conductivity, and is stable against oxidation and can retain a stable electrical conductivity for a long time, these powders are expensive and, therefore, when they are used in electromagnetic shielding coating compositions, the cost becomes high and practical use thereof is difficult. For this reason, although various attempts have been made to use cheaper powders of metals other than noble metals, such as nickel, copper, iron, and aluminum, satisfactory results have not been obtained. For example, copper, which is commercially available in large amounts at a cost of about one-hundredth that of the most inexpensive noble metal, silver, has a good electrical conductivity. But, since copper powders are susceptible to oxidization in the coating compositions, an electrically non-conductive oxide layer will form on the surface thereof and, therefore, the electrical conductivity and the electromagnetic wave shielding properties are reduced in the long term. Therefore, improvements with regard to these points are desired.

In an effort to improve the above-mentioned points, the present inventors have proposed, in Japanese Unexamined Patent Publication (Kokai) No. 62-79278 (i.e., USSN 913198), an electrically conductive coating composition containing specific diphosphonic acid derivatives, which does not cause a decrease in the electrical conductivity of the coating film over the long term. Nevertheless, when R is methyl or ethyl in the general formula (I) shown below, a coating film having excellent electrically conductive properties can be obtained when the coating composition is coated within a storage period of 3 months after the preparation thereof, but when the stored for longer than 3 months, disadvantages arise in that the intended electrically conductive properties cannot be obtained even immediately after coating, and the shielding effects are also poor.

Accordingly, the present invention seeks to solve the above-mentioned problems in the prior art and to provide an electrically conductive coating composition containing a metallic powder having an improved oxidation stability and an excellent electrical conductivity and electromagnetic wave shielding properties after a long period of storage.

Other advantages of the present invention will be apparent from the following description.

In accordance with the present invention, there is provided an electrically conductive coating composition, containing a metallic powder and a thermoplastic and/or thermosetting resin, and at least one diphosphonic acid derivative having the formula (I):

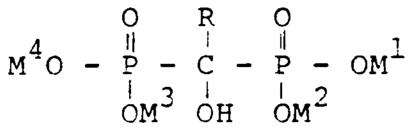 (I)

wherein R represents an alkyl having 7 to 19 carbon atoms, or an aryl having 6 to 14 carbon atoms, preferably 6 to 12 carbon atoms, and $M^1$ to $M^4$ independently represent hydrogen or a cation.

In the above-mentioned general formula (I), R represents an alkyl group having 7 to 19 carbon atoms or an aryl group.

The aryl group includes a phenyl group and the alkyl substituted groups thereof, for example, alkylphenyl groups having an alkyl group with 1 to 8 carbon atoms.

In addition, in the above-mentioned general formula (I), $M^1$ to $M^4$ represent hydrogen or a cation but $M^1$ to $M^4$ may be the same or different. The cations represented by $M^1$ to $M^4$ include inorganic and organic cations. Examples of such cations are the cations of alkali metals such as sodium and potassium, the cations of alkaline earth metals such as magnesium and calcium, and ammonium cations represented by the formula $N(R^1)_4$. In the formula $N(R^1)_4$ , $R^1$ independently represents hydrogen, an alkyl group having 1 to 22 carbon atoms or an aryl group having 6 to 14 carbon atoms, or a substituted alkyl or aryl group such as those substituted with a halogen atom, a hydroxyl group, an amino group, an amido group, or a carboxyl group.

Typical examples of the above-mentioned diphosphonic acid derivatives having the general formula (I) are

1-hydroxyoctane-1,1-diphosphonic acid (HODP), 1-hydroxydodecane-1,1-diphosphonic acid (HDDP), 1-hydroxyhexadecane-1,1-diphosphonic acid, 1-hydroxyoctadecane-1,1-diphosphonic acid (HODDP), 1-hydroxyphenylmethane-1,1-diphosphonic acid (HPhDP),

dicalcium 1-hydroxyoctane-1,1-diphosphonic acid, diammonium 1-hydroxydodecane-1,1-diphosphonate (HDDP-$2NH_3$), di-triethanolamine 1-hydroxydodecane-1,1-diphosphonate (HDDP-2TEA), and dianiline 1-hydroxyoctadecane-1,1-diphosphonate (HODDP-$2NH_2Ph$). These diphosphonic acid derivatives may be used alone or in any mixture thereof.

When for example 1-hydroxyethane-1,1-diphosphonic acid, i.e., R is methyl in the above-mentioned general formula (I), or 1-hydroxypropane-1,1-diphosphonic acid, i.e., R is ethyl in the above-mentioned general formula (I), is contained in a coating composition, the excellent functional effects of the present invention cannot be obtained, as clearly shown hereafter by the Comparative Examples (see Run Nos. 2 - 3 of Table 1). Indeed the functional effect of the present invention cannot be obtained when R represents an alkyl of less than 7. Although the surface resistivities thereof after 3 months are comparable to those of the present invention, the values after 6 months storage are about 10 times those of the present invention and, therefore, it is clear that the electrical conductivity after a long period of storage is poor. Furthermore, the shielding effects after 6 month storage exhibit remarkably low values when compared to those of the present invention, and accordingly, the excellent functional effects of the present invention cannot be obtained.

In the electrically conductive coating composition of the present invention, the above-mentioned diphosphonic acid is preferably used in an amount of 0.1 to 8.0 parts by weight, more preferably 0.3 to 8.0 parts by weight, based on 100 parts by weight of the metallic powder. When the amount of the diphosphonic acid derivative is less than 0.1% by weight based on the metallic powder, the prevention of the decrease in the electrical conductivity is unsatisfactory. Conversely, when the amount of the diphosphonic acid derivative is more than 8 parts by weight, the metallic powder is not easily uniformly disposed in the paste.

The metallic powder component and the resin component usable in the present invention will now be explained.

(A) Metallic Powder

The metallic powder usable in the present invention is a powder of metals and alloys thereof which are oxidized when allowed to stand in air for extended periods, thus forming oxide layers on the surfaces thereof. Such metals are those other than the noble metals (e.g., gold and silver), which are not substantially oxidized under ambient conditions. Typical examples of the metals and alloys thereof usable in the present invention are non-noble metals such as nickel, copper, iron, aluminum, and alloys thereof. These metals and alloys can be used alone or in any mixture thereof.

The metallic powder can be in any shape including, in addition to finely divided granular powder, a fibrous powder and a thin flake powder. For example, in the case of a granular powder, powder having a size of 150 mesh or less, preferably 200 mesh or less in terms of Tyler mesh, is preferably used in the present invention. In the case of a fibrous powder, powder having an individual fiber diameter of 100 µm or less and a length of approximately 5 mm or less is preferably used in the present invention.

The amount of metallic powder in the present electrically conductive composition may be any amount necessary to ensure that the composition exhibits electrical conductivity, and is suitably 35% to 94% by weight, preferably 50% to 90% by weight, especially 60% to 90% by weight, based on the total amount of the resin and the metallic powder in the composition. When a metal having a larger specific density is used, preferably the content of the metal powder is increased. But, if the amount of the metal is too large, it is sometimes difficult to form the resultant composition into a slurry and the coating thereof becomes difficult.

(B) Resins

The resins usable in the present invention can be any of the conventional thermoplastic and/or thermosetting resin used in conventional coating compositions. Typical examples of the thermoplastic composition are thermoplastic acrylic resins, vinyl resins, urethane resins, alkyd resins, polyester resins, hydrocarbon resins, and the like. Typical examples of the thermosetting resins are thermosetting acrylic resins, phenol resins, unsaturated polyester resins, epoxy resins, urethane resins, alkyd resins and the like.

Although there are no specific limitations to the amount of the resins to be included in the present coating composition, the resin is preferably contained in an amount of 6% to 65% by weight, more preferably 10% to 50% by weight, based on the total amount of the resin and the metallic powder in the coating composition.

The electrically conductive coating composition according to the present invention may contain, in addition to the above-mentioned essential constituents, solvents, such as a diluting solvent, conventionally used as the solvents for coating compositions. Examples of such solvents are alcohols such as butyl alcohol, isopropyl alcohol; ketones such as methyl ethyl ketone; esters such as ethyl acetate; aromatic hydrocarbons such as toluene and xylene; and ethers such as turpentine oil, butyl cellosolve, carbitol. Although the amount of solvent is not particularly critical, preferably the solvent is contained in 10 to 500 parts by weight, more preferably 30 to 200 parts by weight, based on 100 parts by weight of the total amount of the metallic powder and the resin. Furthermore, to prevent the precipitation of the metallic powder in the present electrically conductive coating composition during storage and to provide a good dispersibility of the metallic powder in the present coating compositions, thixotropy-providing agents such as collidal silica, or coupling agents such as silane coupling agents can be advantageously used in the present coating composition.

When the electrically conductive coating composition according to the present invention is prepared, the diphosphonic acid derivative may be added to the composition as follows. Namely, the diphosphonic acid derivative may be previously added to and mixed with the resin and the organic solvent, followed by adding the metallic powder thereto and mixing; the metal powder is first treated in a mixture of the diphosphonic acid derivative in the organic solvent, followed by mixing with the resin and the organic solvent; the diphosphonic acid derivative and the metal powder is previously mixed, followed by mixing with the resin and the organic solvent; and the metallic powder, the resin, the diphosphonic derivative, and the organic solvent are simultaneously mixed.

The electrically conductive coating composition according to the present invention may be coated on the back surface of plastic molded articles in any conventional manner, for example, spray coating, brush coating, and screen printing, to provide the plastic molded articles with the desired electrical conductivity.

When the electrically conductive coating material is coated in a coating film thickness of 100 µm, the electric characteristic is an electric resistivity of 4 x $10^{-1}$ Ω/□ and the shield effectiveness is about 60 dB. These values show an improvement of about one tenth of the resistivity and an about 20 dB, at 300 MHz, shield effectiveness, when compared to the case where the diphosphonic acid is not contained. In addition, the increase in resistivity over the long term, a disadvantage of the prior art, was not observed in an exposure test at room temperature and a temperature of 100°C and, therefore, the present coating composition can be used without difficulty as a shield coating composition, from the practical point of view.

In particular, even when the electrically conductive coating composition according to the present invention is stored for 6 months, there are no changes in the electric characteristics and the shield effectiveness is remains excellent.

Accordingly, since the electrically conductive coating composition according to the present invention exhibits an excellent electrical conductivity and has a stable electrically conductive characteristic and shield

effectiveness over the long term, the present coating composition also can be applied to, for example, electrodes of printed wiring and printed parts.

## EXAMPLES

The present invention now will be further illustrated by, but is by no means limited to, the following Examples. In the Examples, the electrical conductivity was evaluated in terms of the surface resistivity (Ω/□) as determined by a JIS (Japan Industrial Standard)-K-6911 test method and the electromagnetic wave shielding effectiveness was determined by a detector TR-4172 manufactured by Takeda Riken (Japan).

Furthermore, the diphosphonic acid used in Examples was obtained by reacting one equivalent of carboxylic acid chloride and two equivalents of phosphorous acid at a temperature of 165 °C for 4 hours. The salt type diphosphonic acid derivatives used in the Examples were synthesized by reacting one equivalent of the diphosphonic acid with two equivalents of various cations.

## Example 1

A 100 parts by weight amount of electrolytic copper powder having a size of 350 mesh pass, 133.3 parts by weight of a methyl ethyl ketone (MEK) solution containing 25% by weight of acryl resin, 30 parts by weight of an isopropyl alcohol (IPA) containing 20% by weight of various diphosphonic acid derivatives, and 75 parts by weight of MEK were mixed, while stirring, to obtain electrically conductive coating compositions. These electrically conductive coating compositions were coated on a polyester film at a dry film thickness of 100 µm within 5 days after the preparation and, after drying at a temperature of 60 °C for 30 minutes, the surface resistivity and the electromagnetic wave shield effectiveness were determined. The surface resistivity was determined after exposure to air at room temperature for one year and at a temperature of 100 °C for 20 days, and the electromagnetic wave shield effectiveness was determined after exposure to air at a temperature of 100 °C for 20 days. Furthermore, after the electrically conductive coating compositions were stored at room temperature for 6 months, the coating compositions were coated on polyester films at a dry film thickness of 100 µm and, after drying at a temperature of 60 °C for 30 minutes, the surface resistivity and the electromagnetic wave shield effectiveness were determined. The determination results are shown, with reference to the compositions of the electrically conductive coating compositions, in Table 1. In the case of the compositions of Run Nos. 6 to 13 according to the present invention, the surface resistivities and the shield effectiveness immediately after drying are approximately $4 \times 10^{-1}$ Ω/□ and approximately 60 dB, respectively, which are superior when compared to those of reference Run No. 1 containing no diphosphonic acid; in that the resistivity is one-tenth and that the shield effectiveness is excellent by about 20 dB, immediately after drying at 300 MHz. Furthermore, in the exposure tests at room temperature and at 100 °C, the metal powder was gradually oxidized with the elapse of time in the case of Run No. 1 and, therefore, a remarkable decrease in the electrical conductivity and the shield effectiveness was observed. Conversely, these changes with the elapse of time were not observed in the case of Run Nos. 6 to 13. Furthermore, in the compositions of Run Nos. 2 and 3, the resistivities became worse after the coating compositions were stored for three months, whereas in the case of the present Run Nos. 6 to 13, the stable resistivities and the shield effectivenesses as shown were determined the coating compositions were stored for six months.

**Table 1**

| | Comparative Example | | | | | Present Example | | | | | | | |
|---|---|---|---|---|---|---|---|---|---|---|---|---|---|
| Run No. | 1 | 2 | 3 | 4 | 5 | 6 | 7 | 8 | 9 | 10 | 11 | 12 | 13 |
| **Electrically conductive coating composition (wt. part)** | | | | | | | | | | | | | |
| Copper powder | 100 | 100 | 100 | 100 | 100 | 100 | 100 | 100 | 100 | 100 | 100 | 100 | 100 |
| Acryl resin/MEK (25 wt.%) | 133.3 | 133.3 | 133.3 | 133.3 | 133.3 | 133.3 | 133.3 | 133.3 | 133.3 | 133.3 | 133.3 | 133.3 | 133.3 |
| 1-Hydroxyethane-1,1-diphosphonic acid/IPA (20wt.%) | 0 | 30 | 0 | 0 | 0 | 0 | 0 | 0 | 0 | 0 | 0 | 0 | 0 |
| 1-Hydroxypropane-1,1-diphosphonic acid/IPA (20 wt.%) | 0 | 0 | 30 | 0 | 0 | 0 | 0 | 0 | 0 | 0 | 0 | 0 | 0 |
| HEDP/IPA (20 wt.%) | 0 | 0 | 0 | 30 | 0 | 0 | 0 | 0 | 0 | 0 | 0 | 0 | 0 |
| HHDP/IPA (20 wt.%) | 0 | 0 | 0 | 0 | 30 | 0 | 0 | 0 | 0 | 0 | 0 | 0 | 0 |
| HODP/IPA (20 wt.%) | 0 | 0 | 0 | 0 | 0 | 30 | 0 | 0 | 0 | 0 | 0 | 0 | 0 |
| HDDP/IPA (20 wt.%) | 0 | 0 | 0 | 0 | 0 | 0 | 30 | 0 | 0 | 0 | 0 | 0 | 0 |
| HODDP/IPA (20 wt.%) | 0 | 0 | 0 | 0 | 0 | 0 | 0 | 30 | 0 | 0 | 0 | 0 | 0 |
| HPhDP/IPA (20 wt.%) | 0 | 0 | 0 | 0 | 0 | 0 | 0 | 0 | 30 | 0 | 0 | 0 | 0 |
| HHDP-2Na/IPA (20 wt.%) | 0 | 0 | 0 | 0 | 0 | 0 | 0 | 0 | 0 | 30 | 0 | 0 | 0 |
| HDDP-2$NH_3$/IPA (20 wt.%) | 0 | 0 | 0 | 0 | 0 | 0 | 0 | 0 | 0 | 0 | 30 | 0 | 0 |
| HDDP-2TEA/IPA (20 wt.%) | 0 | 0 | 0 | 0 | 0 | 0 | 0 | 0 | 0 | 0 | 0 | 30 | 0 |
| HODDP-2$NH_2$-Ph/IPA (20 wt.%) | 0 | 0 | 0 | 0 | 0 | 0 | 0 | 0 | 0 | 0 | 0 | 0 | 30 |
| MEK | 75 | 75 | 75 | 75 | 75 | 75 | 75 | 75 | 75 | 75 | 75 | 75 | 75 |
| **Surface resistivity Ω/□** | | | | | | | | | | | | | |
| Immediately after drying | 2.44 | 0.38 | 0.40 | 0.39 | 0.40 | 0.41 | 0.42 | 0.39 | 0.38 | 0.43 | 0.43 | 0.41 | 0.41 |
| Room temp. after 1 year | $2.8x10^2$ | 0.41 | 0.39 | 0.40 | 0.41 | 0.39 | 0.41 | 0.40 | 0.40 | 0.41 | 0.42 | 0.42 | 0.41 |
| 100°C, after 4 days | $2.5x10^2$ | 0.38 | 0.42 | 0.42 | 0.42 | 0.38 | 0.38 | 0.41 | 0.42 | 0.41 | 0.41 | 0.41 | 0.42 |
| 100°C, after 8 days | $2.0x10^3$ | 0.41 | 0.43 | 0.38 | 0.38 | 0.38 | 0.39 | 0.40 | 0.41 | 0.42 | 0.43 | 0.43 | 0.39 |
| 100°C, after 20 days | $6.4x10^8$ | 0.40 | 0.41 | 0.41 | 0.39 | 0.41 | 0.42 | 0.41 | 0.39 | 0.39 | 0.39 | 0.42 | 0.40 |
| **Electromagnetic wave shield effectiveness dB (Elec. field)** | | | | | | | | | | | | | |
| Immediately after drying 100 MHz | 48 | 60 | 58 | 58 | 57 | 57 | 59 | 58 | 59 | 60 | 58 | 59 | 60 |
| 200 MHz | 43 | 63 | 63 | 63 | 62 | 63 | 62 | 63 | 63 | 63 | 62 | 62 | 62 |
| 300 MHz | 39 | 63 | 62 | 63 | 62 | 62 | 62 | 62 | 64 | 63 | 62 | 63 | 63 |
| 100°C, after 20 days 100 MHz | 6 | 59 | 58 | 59 | 58 | 58 | 59 | 60 | 57 | 57 | 58 | 59 | 60 |
| 200 MHz | 5 | 63 | 62 | 62 | 63 | 62 | 62 | 62 | 62 | 63 | 62 | 61 | 62 |
| 300 MHz | 5 | 63 | 63 | 63 | 63 | 63 | 63 | 63 | 62 | 63 | 63 | 63 | 62 |
| **Surface resistivity (Ω/□) of coating composition after storage** | | | | | | | | | | | | | |
| After 1 month storage | 2.43 | 0.41 | 0.40 | 0.39 | 0.40 | 0.41 | 0.39 | 0.38 | 0.35 | 0.38 | 0.38 | 0.37 | 0.38 |
| After 3 months storage | 3.29 | 0.39 | 0.41 | 0.41 | 0.41 | 0.39 | 0.41 | 0.39 | 0.39 | 0.37 | 0.41 | 0.41 | 0.41 |
| After 6 months storage | 3.03 | 3.04 | 3.38 | 0.63 | 0.65 | 0.40 | 0.39 | 0.41 | 0.38 | 0.41 | 0.41 | 0.39 | 0.39 |
| **Shield effectiveness dB (elec. field) of coating composition after storage** | | | | | | | | | | | | | |
| After 6 months storage 100 MHz | 47 | 46 | 45 | 54 | 53 | 57 | 57 | 57 | 58 | 59 | 57 | 57 | 58 |
| 200 MHz | 40 | 41 | 39 | 57 | 56 | 63 | 63 | 62 | 63 | 62 | 62 | 62 | 63 |
| 300 MHz | 35 | 36 | 34 | 55 | 54 | 63 | 62 | 62 | 63 | 63 | 62 | 62 | 63 |

## Example 2

Various amounts of a toluene solution containing 20% of HDDP were added to a mixture of 100 parts by weight of an electrolytic copper powder having a size of 350 mesh pass, 133.3 parts by weight of a toluene solution containing 25% by weight of acryl resin and 75 parts by weight of toluene. The resultant mixtures were mixed, while stirring, to obtain electrically conductive coating compositions. The coating compositions were coated and dried and the surface resistivities were determined, in the same manner as in Example 1, after exposure for one year at room temperature and after 4 days, 8 days, and 20 days exposure at a temperature of 100 ° C. The results are shown in Table 2.

Table 2

| Run No. | 14 | 15 | 16 | 17 | 18 | 19* |
|---|---|---|---|---|---|---|
| Amount (wt. part) of HDDP added based on 100 wt.part of copper powder | 0.1 | 0.3 | 3.1 | 5.0 | 8.0 | 8.5 |
| Surface resistivity Ω/□ | | | | | | |
| Immediately after drying | 2.32 | 0.38 | 0.33 | 0.35 | 0.32 | - |
| Room temp., after 1 year | 5.55 | 0.67 | 0.38 | 0.39 | 0.38 | - |
| 100°C, after 4 days | 7.02 | 0.78 | 0.34 | 0.38 | 0.39 | - |
| 100°C, after 8 days | $3.1 \times 10^2$ | 5.32 | 0.41 | 0.40 | 0.40 | - |
| 100°C, after 20 days | $2.6 \times 10^3$ | $1.5 \times 10^1$ | 0.40 | 0.41 | 0.41 | - |

* Since the composition of Run No. 19 could not be obtained in the form of a paste, the surface resistivity could not be determined.

Example 3

To 133.3 parts by weight of organic solvent solutions containing 25% by weight of various kinds of resins shown in Table 3 were added 100 parts by weight of the electrolytic copper powder having a size of 350 mesh pass, 75 parts by weight of a diluting solvent, 30 parts by weight of an IPA solution containing 20% by weight of HDDP, and 1.5 parts by weight of colloidal silica, to obtain electrically conductive coating

compositions. The coating, drying, and evaluation tests were carried out in the same manner as in Example 1, and the results are shown in Table 3.

Table 3

| Run No. | | 20 | 21 | 22 | 23 | 24 | 25 | 26 | 27 |
|---|---|---|---|---|---|---|---|---|---|
| Electrically conductive coating composition (wt. part) | | | | | | | | | |
| Copper powder | | 100 | 100 | 100 | 100 | 100 | 100 | 100 | 100 |
| Acryl resin/MEK (25 wt.%) | | 133.3 | 133.3 | 0 | 0 | 0 | 0 | 0 | 0 |
| PVA resin/Isoamyl acetate (25 wt.%) | | 0 | 0 | 133.3 | 133.3 | 0 | 0 | 0 | 0 |
| Epoxy resin/Butyl carbitol (25 wt.%) | | 0 | 0 | 0 | 0 | 133.3 | 133.3 | 0 | 0 |
| Urethane resin/Toluene (25 wt%) | | 0 | 0 | 0 | 0 | 0 | 0 | 133.3 | 133.3 |
| Isoamyl acetate | | 0 | 0 | 75 | 75 | 0 | 0 | 0 | 0 |
| Butyl carbitol | | 0 | 0 | 0 | 0 | 75 | 75 | 0 | 0 |
| Toluene | | 75 | 75 | 0 | 0 | 0 | 0 | 75 | 75 |
| HDDP/IPA (20 wt%) | | 30.0 | 0 | 30.0 | 0 | 30.0 | 0 | 30.0 | 0 |
| Colloidal silica | | 1.5 | 1.5 | 1.5 | 1.5 | 1.5 | 1.5 | 1.5 | 1.5 |
| Drying temp. (°C), Time (hr) | | 70, 0.5 | 70, 0.5 | 150, 0.5 | 150, 0.5 | 180, 1 | 180, 1 | 25, 24 | 25, 24 |
| Surface resistivity Ω/□ | | | | | | | | | |
| Immediately after drying | | 0.39 | 2.48 | 0.39 | 2.48 | 0.35 | 4.82 | 0.32 | 3.89 |
| Room temp., after 1 year | | 0.40 | $2.9x10^2$ | 0.39 | $2.8x10^2$ | 0.37 | $3.8x10^2$ | 0.33 | $4.9x10^2$ |
| 100°C, after 4 days | | 0.41 | $3.1x10^2$ | 0.41 | $3.1x10^2$ | 0.38 | $3.0x10^2$ | 0.39 | $2.9x10^2$ |
| 100°C, after 8 days | | 0.39 | $2.0x10^3$ | 0.40 | $9.2x10^2$ | 0.37 | $2.3x10^3$ | 0.36 | $2.9x10^3$ |
| 100°C, after 20 days | | 0.41 | $6.4x10^6$ | 0.38 | $9.8x10^6$ | 0.41 | $2.9x10^6$ | 0.37 | $3.1x10^5$ |
| Electromagnetic wave shield effectiveness, dB (elec. field) | | | | | | | | | |
| Immediately after drying | 100 MHz | 60 | 47 | 60 | 48 | 59 | 47 | 59 | 51 |
| | 200 MHz | 62 | 42 | 61 | 43 | 60 | 42 | 60 | 50 |
| | 300 MHz | 62 | 39 | 63 | 38 | 62 | 39 | 63 | 41 |
| 100°C, after 20 days | 100 MHz | 60 | 6 | 58 | 10 | 58 | 9 | 59 | 8 |
| | 200 MHz | 62 | 4 | 62 | 9 | 62 | 6 | 60 | 7 |
| | 300 MHz | 63 | 4 | 63 | 8 | 63 | 3 | 63 | 6 |
| Surface resistivity (Ω/□) of coating composition after storage | | | | | | | | | |
| 1 month storage | | 0.39 | 2.58 | 0.41 | 2.49 | 0.40 | 4.91 | 0.41 | 3.88 |
| 3 month storage | | 0.41 | 2.77 | 0.40 | 3.02 | 0.39 | 5.00 | 0.40 | 3.87 |
| 6 month storage | | 0.39 | $2.0x10^1$ | 0.39 | $3.1x10^1$ | 0.37 | $4.3x10^1$ | 0.42 | $5.2x10^1$ |
| Shield effectiveness of coating composition after storage, dB (elec. field) | | | | | | | | | |
| 6 month storage | 100 MHz | 57 | 23 | 56 | 25 | 59 | 26 | 57 | 24 |
| | 200 MHz | 63 | 20 | 62 | 21 | 62 | 22 | 62 | 21 |
| | 300 MHz | 63 | 18 | 62 | 19 | 63 | 20 | 62 | 18 |

Example 4

To 75 parts by weight of toluene, a toluene solution containing 25% by weight of acryl resin and electrolytic copper powder having a size of 350 mesh pass were added in various amounts such that the total amount of these two components became 233.3 parts by weight. Furthermore, a toluene solution containing 20% by weight of HDDP was added in an amount such that the amount of HDDP was 6 parts by weight, based on 100 parts by weight of the copper powder, followed by mixing while stirring, to obtain electrically conductive coating compositions. The coating, drying, and evaluation tests were carried out in

the same manner as in Example 2. The results are shown in Table 4.

Table 4

| Run No. | 28 | 29 | 30 | 31 | 32* |
|---|---|---|---|---|---|
| Solid content (wt. part) in electrically conductive coating composition | | | | | |
| Copper powder | 50 | 65 | 80 | 90 | 92 |
| Acryl resin | 50 | 35 | 20 | 10 | 8 |
| HDDP | 3.0 | 3.9 | 4.8 | 5.4 | 5.5 |
| Surface resistivity Ω/□ | | | | | |
| Immediately after drying | $1.2 \times 10^6$ | 1.25 | 0.41 | 0.33 | - |
| Room temp., after 1 year | $1.8 \times 10^6$ | 1.32 | 0.39 | 0.36 | - |
| 100°C, after 4 days | $2.5 \times 10^6$ | 1.30 | 0.38 | 0.39 | - |
| 100°C, after 8 days | $1.3 \times 10^6$ | 1.24 | 0.40 | 0.38 | - |
| 100°C, after 20 days | $3.9 \times 10^6$ | 1.30 | 0.40 | 0.40 | - |

* Since the composition of Run No. 32 could not be obtained in the form of a paste, the surface resistivity could not be obtained.

Example 5

A 100 parts by weight amount of various kinds of metallic powder, 133.3 parts by weight of a toluene solution containing 25% by weight of acryl resin, 30 parts by weight of a toluene solution containing 20% by weight of HDDP, and 75 parts by weight of toluene were mixed together, while stirring, to obtain electrically conductive coating compositions. The coating, drying, and evaluation tests were carried out in the same manner as in Example 1. The results are shown in Table 5.

Table 5

| Run No. | 33 | 34 | 35 | 36 | 37 | 38 |
|---|---|---|---|---|---|---|
| **Composition (wt. part) of electrically conductive coating composition** | | | | | | |
| Nickel powder | 100 | 100 | 0 | 0 | 0 | 0 |
| Aluminum powder | 0 | 0 | 100 | 100 | 0 | 0 |
| Iron powder | 0 | 0 | 0 | 0 | 100 | 100 |
| Acryl resin/toluene (25 wt.%) | 133.3 | 133.3 | 133.3 | 133.3 | 133.3 | 133.3 |
| HDDP/toluene (20 wt.%) | 30 | 0 | 30 | 0 | 30 | 0 |
| Toluene | 75 | 75 | 75 | 75 | 75 | 75 |
| **Surface resistivity Ω/□** | | | | | | |
| Immediately after drying | 0.68 | 3.59 | 0.71 | 2.10 | 2.18 | $3.2 \times 10^2$ |
| Room temperature, after 1 year | 0.69 | 6.81 | 0.77 | 4.18 | 2.01 | $3.3 \times 10^4$ |
| 100°C, after 4 days | 0.65 | 6.92 | 0.75 | 4.29 | 2.09 | $3.2 \times 10^4$ |
| 100°C, after 8 days | 0.67 | $6.1 \times 10^1$ | 0.71 | $7.9 \times 10^1$ | 1.99 | $3.3 \times 10^6$ |
| 100°C, after 20 days | 0.66 | $9.1 \times 10^1$ | 0.76 | $1.0 \times 10^2$ | 2.12 | $3.9 \times 10^6$ |
| **Electromagnetic wave shield effectiveness, dB (elec. field)** | | | | | | |
| Immediately after drying, 100 MHz | 55 | 31 | 54 | 31 | 32 | 12 |
| 200 MHz | 62 | 20 | 62 | 23 | 31 | 9 |
| 300 MHz | 63 | 11 | 63 | 12 | 30 | 9 |
| 100°C, after 20 days, 100 MHz | 57 | 19 | 55 | 18 | 31 | 5 |
| 200 MHz | 62 | 20 | 61 | 21 | 20 | 4 |
| 300 MHz | 63 | 17 | 63 | 14 | 33 | 2 |

## Claims

1. An electrically conductive coating composition, containing a metallic powder and a thermoplastic and/or thermosetting resin, characterized in that at least one diphosphonic acid derivative having the formula (I):

$$M^4O-\overset{\overset{\displaystyle O}{\|}}{\underset{\underset{\displaystyle OM^3}{|}}{P}}-\overset{\overset{\displaystyle R}{|}}{\underset{\underset{\displaystyle OH}{|}}{C}}-\overset{\overset{\displaystyle O}{\|}}{\underset{\underset{\displaystyle OM^2}{|}}{P}}-OM^1 \qquad (I)$$

wherein R represents an alkyl having 7 to 19 carbon atoms or an aryl having 6 to 14 carbon atoms and $M^1$ to $M^4$ independently represent hydrogen or a cation is included.

2. An electrically conductive coating composition as claimed in claim 1, wherein the diphosphonic acid is at least one compound selected from the group consistnig of

1-hydroxyoctane-1,1-diphosphonic acid (HODP), 1-hydroxydodecane-1,1-diphosphonic acid

(HDDP), 1-hydroxyhexadecane-1,1-diphosphonic acid, 1-hydroxyoctadecane-1,1-diphosphonic acid (HODDP), 1-hydroxyphenylmethane-1,1-diphosphonic acid (HPhDP),

dicalcium 1-hydroxyoctane-1,1-diphosphonic acid, diammonium 1-hydroxydodecane-1,1-diphosphonate (HDDP-2$NH_3$), di-triethanolamine 1-hydroxydodecane-1,1-diphosphonate (HDDP-2TEA), and dianiline 1-hydroxyoctadecane-1,1-diphosphonate (HODDP-2$NH_2$Ph).

**3.** An electrically conductive coating composition as claimed in claim 1, wherein the amount of the diphosphonium acid derivative is 0.1 to 8.0 parts by weight based on 100 parts by weight of the metallic powder.

## Patentansprüche

**1.** Elektrisch leitende Beschichtungsmasse mit einem metallischen Pulver und einem thermoplastischen und/oder wärmehärtbaren Harz, dadurch gekennzeichnet, daß sie mindestens ein Diphosphonsäure-Derivat der Formel (I)

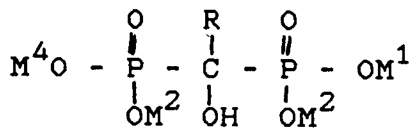

(I)

worin bedeuten:
R ein Alkyl mit 7 bis 19 Kohlenstoffatomen oder ein Aryl mit 6 bis 14 Kohlenstoffatomen und
$M^1$ bis $M^4$ unabhängig voneinander jeweils Wasserstoff oder ein Kation
enthält.

**2.** Elektrisch leitende Beschichtungsmasse nach Anspruch 1, die als Diphosphonsäure mindestens eine Verbindung aus der Gruppe:
1-Hydroxyoctan-1,1-diphosphonsäure (HODP), 1-Hydroxydodecan-1,1-diphosphonsäure (HDDP), 1-Hydroxyhexadecan-1,1-diphosphonsäure, 1-Hydroxyoctadecan-1,1-diphosphonsäure (HODDP), 1-Hydroxyphenylmethan-1,1-diphosphonsäure (HPhDP), Dicalcium-1-hydroxyoctan-1,1-diphosphonsäure, Diammonium-1-hydroxydodecan-1,1-diphosphonat (HDDP-2$NH_3$), Ditriethanolamin-1-hydroxydodecan-1,1-diphosphonat (HDDP-2TEA) und Dianilin 1-hydroxyoctadecan-1,1-diphosphonat (HODDP-2$NH_2$Ph) enthält.

**3.** Elektrisch leitende Beschichtungsmasse nach Anspruch 1, worin die Menge an Diphosphonsäure-Derivat, bezogen auf 100 Gewichtsteile des metallischen Pulvers, 0,1 bis 8,0 Gewichtsteil(e) beträgt.

## Revendications

**1.** Composition de revêtement conducteur de l'électricité, contenant une poudre métallique et une résine thermoplastique et/ou thermodurcissable, caractérisée par le fait qu'elle comprend au moins un dérivé d'acide diphosphonique représenté par la formule (I) :

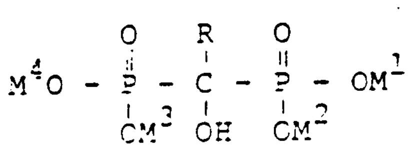

(I)

dans laquelle :

- R représente un alkyle ayant 7 à 19 atomes de carbone ou un aryle ayant 6 à 14 atomes de carbone ; et
- $M^1$ à $M^4$ représentent indépendamment hydrogène ou un cation.

**2.** Composition de revêtement conducteur de l'électricité selon la revendication 1, dans laquelle l'acide diphosphonique est au moins un composé choisi dans le groupe constitué par : l'acide hydroxy-1 octane-diphosphonique-1,1 (HODP), l'acide hydroxy-1 dodécane-diphosphonique-1,1 (HDDP), l'acide hydroxy-1 hexadécane-diphosphonique-1,1, l'acide hydroxy-1 octadécane-diphosphonique-1,1 (HODDP), l'acide hydroxy-1 phénylméthane-diphosphonique-1,1 (HPhDP), l'acide hydroxy-1 octane-diphosphonique-1,1 dicalcique, l'hydroxy-1 dodécane-diphosphonate-1,1 de diammonium (HDDP-2$NH_3$), l'hydroxy-1 dodécane-diphosphonate-1,1 de di-triéthanolamine (HDDP-2TEA), et l'hydroxy-1 octadécane-diphosphonate-1,1 de dianiline (HODDP-2$NH_2$Ph).

**3.** Composition de revêtement conducteur de l'électricité selon la revendication 1, dans laquelle la quantité du dérivé d'acide de disphosphonium est de 0,1 à 8,0 parties en poids, sur la base de 100 parties en poids de la poudre métallique.